# FASCICULE DE BREVET EUROPEEN

(11) **EP 0 830 400 B1**
(45) Date de publication et mention de la délivrance du brevet: **11.08.1999**
(21) Numéro de dépôt: 96920872.7
(22) Date de dépôt: 31.05.1996
(51) Int. Cl.: C08F 257/02, C08F 265/04

(54) **POUDRES REDISPERSABLES DANS L'EAU DE POLYMERES FILMOGENES A STRUCTURE "COEUR/ECORCE"**
WASSER-REDISPERGIERBARES PULVER AUS FILMFORMENDEN POLYMEREN MIT KERN-SCHALE STRUKTUR
WATER-REDISPERSIBLE POWDERS OF FILM-FORMING POLYMERS HAVING A CORE/SHELL STRUCTURE

(30) Priorité: 09.06.1995 FR 9506810
(43) Date de publication de la demande: 25.03.1998
(73) Titulaire: RHODIA CHIMIE, 92408 Courbevoie Cédex (FR)
(72) Inventeur: RICHARD, Joel, F-49160 Blou (FR); BETT, William, F-75011 Paris (FR)
(74) Mandataire: Dubruc, Philippe
(86) Numéro de dépôt international: FR9600815
(87) Numéro de publication internationale: WO9641825

(56) Documents cités:
- EP-A- 0 251 348
- EP-A- 0 348 565
- DE-C- 4 341 156

## Description

La présente invention concerne des poudres redispersables dans l'eau à base de polymères filmogènes à structure "coeur/écorce", lesdits polymères filmogènes étant préparés par polymérisation en émulsion aqueuse de monomères à insaturation éthylénique.

On connaît déjà des poudres redispersables de type ci-dessus qui sont obtenues généralement par pulvérisation-séchage de latex de polymères. Ces poudres présentent un grand intérêt commercial car elles peuvent être commercialisées telles quelles aux différents utilisateurs qui les redispersent dans l'eau pour préparer des formulations adaptées aux utilisations classiques des latex, à savoir notamment la préparation de compositions de couchage de papier, de compositions de peinture, de revêtements adhésifs (adhésifs sensibles à la pression, colles-carrelages) et additifs à des liants hydrauliques du type mortiers ou bétons.

On comprend que la vente de telles poudres redispersables par l'utilisateur en un pseudo ou néo-latex présente, par rapport à la vente du latex de départ, l'immense avantage de ne pas comporter d'eau qui constitue généralement au moins 50 % du poids du latex, ce qui entraîne des économies de transport et de manutention considérables.

Toutefois de telles poudres doivent présenter les propriétés suivantes pour être commercialisables :
- elles doivent être stables au stockage,
- elles doivent être aisément redispersables dans l'eau à température ambiante et générer un néo-latex de granulométrie resserrée et adaptée à l'application visée,
- pour l'application additif aux liants hydrauliques plus particulièrement visée pour la présente invention, il faut que l'additif issu de la poudre redispersable soit compatible avec le liant hydraulique, permette au liant hydraulique de prendre en masse sans retarder le processus de prise et conférer aux revêtements comportant le liant additivé une adhérence correcte aux supports habituels même à l'état humide, ainsi que de bonnes propriétés mécaniques,
- elles doivent être redispersables dans une large gamme de pH,
- elles doivent présenter une bonne redispersion dans en milieu contenant des ions multivalents, en particulier alcalins.

La présente invention a pour but de proposer une poudre redispersable présentant l'ensemble des propriétés désirées indiquées ci-dessus ainsi qu'un procédé de préparation de cette poudre.

Dans ce but, l'invention concerne tout d'abord une poudre redispersable dans l'eau à base de polymères filmogènes sensiblement insolubles dans l'eau préparés par polymérisation en émulsion aqueuse de monomères à insaturation éthylénique et à structure "coeur/écorce" comportant :
. un coeur hydrophobe à base d'un polymère présentant une Tg (température de transition vitreuse) comprise entre - 30 et 25°C, de préférence entre - 10 et 20°C, et
. une écorce à base d'un polymère dur, hydrophile, présentant une Tg supérieure à 55°C, l'écorce étant liée au coeur par des liaisons covalentes résultant de la réaction d'un agent de greffage de l'écorce sur les insaturations éthyléniques subsistant dans le coeur,
caractérisée en ce que l'écorce est préparée par polymérisation en émulsion sur le coeur d'un mélange de monomères, comportant :
. au plus 90 %, de préférence de 50 à 80 % en poids d'au moins un monomère choisi parmi le styrène, un acrylate ou méthacrylate d'alkyle en C₁ - C₁₂,
. au plus 50 %, de préférence de 15 à 40 % en poids d'au moins un monomère porteur d'un groupement saccharide et présentant au moins une insaturation éthylénique, et
. au plus 10 %, de préférence au plus 5 % en poids d'au moins un agent de greffage choisi parmi les esters alkèniques tels les esters (méth)allyliques de l'acide (méth)acrylique, les esters (méth)allyliques des mono et diesters des acides maléique, fumarique et itaconique, ainsi que les dérivés alkéniques des amides des acides acryliques et méthacryliques, tels que le N-méthallylmaléimide.

L'invention concerne aussi un pseudo-latex obtenu par redispersion dans l'eau d'une poudre redispersable selon l'invention.

L'invention concerne également un procédé de préparation d'une poudre selon l'invention qui consiste à réaliser les étapes suivantes :
- on prépare le coeur par polymérisation en émulsion aqueuse puis,
- on polymérise en émulsion aqueuse un mélange de monomères sur le coeur en présence d'un agent de greffage et d'un initiateur de polymérisation organophile, ce par quoi on forme l'écorce puis,
- on élimine l'eau du milieu réactionnel.

Enfin, l'invention concerne l'utilisation desdits pseudo-latex et des poudres redispersables selon l'invention, comme additifs à des liants hydrauliques, des adhésifs, des compositions de couchage du papier et des peintures.

L'invention concerne tout d'abord une poudre redispersable dans l'eau à base de polymères filmogènes sensiblement insolubles dans l'eau préparés par polymérisation en émulsion aqueuse de monomères à insaturation éthylénique et à structure "coeur/écorce" comportant :
. un coeur hydrophobe à base d'un polymère présentant une Tg (température de transition vitreuse) comprise entre - 30 et 25°C, de préférence entre- 10 et 20°C, et
. une écorce à base d'un polymère dur, hydrophile, présentant une Tg supérieure à 55°C, l'écorce étant liée au coeur par des liaisons covalentes résultant de la réaction d'un agent de greffage de l'écorce sur les insaturations éthyléniques subsistant dans le coeur,
caractérisée en ce que l'écorce est préparée par polymérisation en émulsion sur les particules de coeur d'un mélange de monomères, comportant:
. au plus 90 %, de préférence de 50 à 80 % en poids d'au moins un monomère choisi parmi le styrène, un acrylate ou méthacrylate d'alkyle en C₁ - C₁₂,
. au plus 50 %, de préférence de 15 à 40 % en poids d'au moins un monomère porteur d'un groupement saccharide et présentant au moins une insaturation éthylénique, et
. au plus 10 %, de préférence au plus 5 % en poids d'au moins un agent de greffage choisi parmi les esters alkèniques tels que esters (méth)allyliques de l'acide (méth)acrylique, les esters (méth)allyliques des mono et diesters des acides maléique, fumarique et itaconique, ainsi que les dérivés alkèniques des amides des acides acryliques et méthacryliques, tels que le N-méthallylmaléimide.

La poudre selon l'invention se compose de particules à base de polymères filmogènes insolubles dans l'eau présentant une structure coeur/écorce. Ces particules coeur/écorce sont constituées d'un coeur formé d'un polymère hydrophobe et mou c'est-à-dire présentent une Tg comprise entre - 30 et + 25 °C, de préférence entre - 10 et + 20 °C qui comporte des insaturations éthyléniques subsistantes, et d'une écorce à base d'un polymère dur, hydrophile présentant une Tg supérieure à 55 °C, de préférence supérieure à 90°C. L'écorce est liée au coeur par des liaisons covalentes résultant de la réaction d'un agent de greffage de l'écorce sur les insaturations éthyléniques subsistant dans le coeur.

La température de transition vitreuse est déterminée par la méthode d'analyse thermique différentielle.

De telles particules de polymères coeur/écorce sensiblement insolubles dans l'eau sont préparées à partir d'un latex de polymère par un procédé de polymérisation en deux étapes tel que par exemple celui décrit dans le brevet US-A 4 876 313 selon lequel on prépare, au cours d'une première étape, le coeur formé d'un polymère hydrophobe et mou et, au cours d'une deuxième étape, on greffe sur le coeur l'écorce formée d'un polymère dur et hydrophile.

En général, le coeur est préparé par polymérisation d'un mélange de monomères comportant de 99,9 à 92 % en poids d'au moins un monomère choisi parmi le styrène, le butadiène et les acrylates et méthacrylates d'alkyle en C₁-C₁₂, et de 0,1 à 8 % en poids d'au moins un monomère choisi parmi un acide carboxylique à insaturation éthylénique, un ester d'acide carboxylique insaturé à fonction hydroxyalkyle ou un monomère à fonction amide. De préférence, le coeur est préparé par polymérisation d'un mélange de monomères à base de styrène et de butadiène.

Le caractère plus ou moins hydrophobe du coeur peut être réglé par les monomères acide carboxylique à insaturation éthylénique, tels que l'acide acrylique, l'acide méthacrylique, l'acide itaconique, l'acide maléique, l'acide fumarique, ou un monomère ester d'acide carboxylique insaturé à fonction hydroxyalkyle comme l'acrylate d'hydroxyéthyle et l'acrylate d'hydroxypropyle ou un monomère à fonction amide choisi par exemple parmi le méthylol-acrylamide, l'acrylamide, la méthacrylamide et la méthylméthacrylamide.

L'homme du métier sait choisir les quantités respectives de monomères "durs" (par exemple styrène et méthacrylate de méthyle) et de monomères "mous" (par exemple butadiène et acrylate de butyle) en vue d'obtenir un polymère ayant la Tg désirée comprise entre - 30 et + 25 °C.

Les monomères mis en oeuvre au cours de cette première étape peuvent être introduits en mélange ou séparément et simultanément dans le milieu réactionnel, soit avant le début de la polymérisation en une seule fois, soit au cours de la polymérisation par fractions successives ou en continu.

La polymérisation des monomères formant le coeur est mise en oeuvre en présence d'un émulsifiant et d'un initiateur de polymérisation.

En tant qu'agent émulsifiant, on met en oeuvre généralement les agents anioniques classiques représentés notamment par les sels d'acides gras, les alkylsulfates, les alkylsulfonates, les alkylarylsulfates, les alkylarylsulfonates, les arylsulfates, les arylsulfonates, les sulfosuccinates, les alkylphosphates de métaux alcalins. Ils sont employés à raison de 0,01 à 5% en poids par rapport au poids total des monomères.

L'initiateur de polymérisation en émulsion, qui est hydrosoluble, est représenté plus particulièrement par les hydroperoxydes tels que l'eau oxygénée, l'hydroperoxyde de tertiobutyle et par les persulfates tels que le persulfate de sodium, le persulfate de potassium, le persulfate d'ammonium. Il est employé en quantités comprises entre 0,05 et 2% en poids par rapport au total des monomères. Ces initiateurs sont éventuellement associés à un réducteur, tel que le bisulfite ou le formaldéhydesulfoxylate de sodium, les polyéthylèneamines, les sucres : dextrose, saccharose, les sels métalliques. Les quantités de réducteur utilisés varient de 0 à 3% en poids par rapport au poids total des monomères.

La température de réaction, fonction de l'initiateur mis en oeuvre, est généralement comprise entre 0 et 100°C, et de préférence, entre 50 et 80°C.

On peut utiliser un agent de transfert dans des proportions allant de 0 à 3% en poids par rapport au(x) monomère(s), généralement choisi parmi les mercaptans tels que le n-dodécylmercaptan, le tertiododécylmercaptan ; le cyclohexène ; les hydrocarbures halogénés tels que le chloroforme, le bromoforme, le tétrachlorure de carbone.

A la fin de la première étape de préparation du coeur, on débute la deuxième étape de préparation de l'écorce en ajoutant directement au latex comportant les particules de coeur, un mélange de monomères adapté pour réaliser une écorce dure et hydrophile telle que définie précédemment.

Par ailleurs, au cours de la deuxième étape, on ajoute au cours de la polymérisation en émulsion une quantité efficace d'un agent de greffage pour lier par des liaisons covalentes l'écorce aux insaturations éthyléniques subsistant dans le coeur afin de greffer solidement l'écorce sur le coeur.

Jusqu'à 90 % en poids des monomères de base de l'écorce sont choisis parmi le styrène, un acrylate ou méthacrylate d'alkyle en C₁-C₁₂. L'acrylate ou le méthacrylate d'alkyle peut être par exemple choisi parmi le (meth)acrylate de méthyle, d'éthyle, le (meth)acrylate de butyle, le (meth)acrylate d'éthyl-2 hexyle.

Le caractère hydrophile de l'écorce est réglé en ajoutant jusqu'à 50 % en poids d'un monomère porteur d'un groupement saccharide et présentant au moins une insaturation éthylénique. De préférence, ce monomère porteur d'un groupement saccharide et présentant au moins une insaturation éthylénique porte un groupement saccharide choisi parmi les mono- et disaccharides. Dans le cas de groupements monosaccharides, il peut s'agir par exemple du glucose, du galactose ou du fructose. Dans le cas de groupements disaccharides, il peut s'agir par exemple du saccharose, du lactose ou du maltose.

De manière très avantageuse, le groupement saccharide est le saccharose. Dans ce dernier cas, le monomère porteur d'un groupement saccharose et présentant au moins une insaturation éthylénique peut être choisi parmi le O-méthacryloyl-saccharose, le O-vinylbenzyl-saccharose ou le O-acétalstyryl-saccharose et leurs dérivés alkylés et/ou acétylés dans lesquels les groupements alkyls comportent un nombre de carbones compris entre 1 et 4.

Le point important est que l'écorce doit avoir un caractère hydrophile sensiblement plus élevé que le coeur. Selon un mode de réalisation de l'invention, l'écorce peut être insoluble en milieu alcalin.

L'homme du métier sait choisir les quantités respectives de monomères "durs" et de monomères "mous" en vue d'obtenir un polymère ayant la Tg de l'écorce désirée supérieure à 55°C.

Le milieu de polymérisation contient en outre un agent de greffage en quantité suffisante et suffisamment réactif pour créer des liaisons covalentes entre l'écorce et des liaisons éthyléniques présentes dans le coeur afin de greffer solidement l'écorce sur le coeur.

Cet agent de greffage est constitué par un composé organique comportant aux moins deux insaturations éthyléniques présentant des réactivités différentes lors des réactions de polymérisation en émulsion, l'insaturation la plus réactive réagissant avec les monomères de telle sorte que l'agent de greffage fasse partie intégrante du polymère constituant l'écorce, l'autre insaturation étant insuffisamment réactive pour se polyadditionner avec les insaturations éthyléniques des autres monomères mais étant suffisamment réactive pour réagir avec les doubles liaisons subsistantes du coeur pour lier l'écorce au coeur par des liaisons covalentes.

Comme agent de greffage efficace on peut citer les esters alkéniques et plus particulierement (méth)allyliques de l'acide (meth)acrylique tels que l'allylméthacrylate, l'allylacrylate, les esters (méth)allyliques des mono et diesters des acides maléique, fumarique et itaconique, ainsi que les dérivés alkéniques des amides des acides acryliques et méthacryliques, tels que le N-méthallylmaléimide.

L'agent de greffage peut être ajouté selon une quantité généralement d'au plus 10 %, de préférence d'au moins 0,2 %, encore plus préférentiellement comprise entre 0,5 et 5 % voire 0,5 et 3% en poids de monomères de l'écorce.

Selon un mode préféré de l'invention, l'écorce est préparée par polymérisation en émulsion d'un mélange de méthacrylate de méthyle, de O-méthacroyl-saccharose et d'un agent de greffage.

Selon un autre mode préféré de l'invention, l'écorce est préparée par polymérisation en émulsion d'un mélange de styrène, de O-vinylbenzyl-saccharose et d'un agent de greffage.

La polymérisation en émulsion de l'écorce s'effectue dans des conditions similaires à celles du coeur.

En général, pour les particules de poudre redispersable selon l'invention, l'écorce constitue de 50 à 5 % de préférence de 30 à 10 % en poids du poids total coeur + écorce.

La poudre redispersable selon l'invention peut comprendre en outre au moins une charge minérale. Celle-ci peut présenter une granulométrie varaible. Comme charge minérale, on recommande d'utiliser une charge choisie notamment parmi le carbonate de calcium, le kaolin, le sulfate de baryum, l'oxyde de titane, le talc, l'alumine hydratée, la bentonite, la silice et le sulfoaluminate de calcium (blanc satin).

La poudre peut comprendre pour 100 parties en poids de polymères filmogènes de 0,5 à 40, de préférence de 2 à 20 parties en poids de ladite charge.

La granulométrie de la poudre est généralement inférieure à 500 µm, de préférence inférieure à 100 µm,

Les poudres selon l'invention présentent en général un pH compris entre 4 et 9. Elles peuvent être redispersées dans tout milieu de pH compris entre 1 et 13, de préférence entre 4 et 10.

Dans la plupart des cas, les poudres selon l'invention sont totalement redispersables dans l'eau à température ambiante par simple agitation. Par totalement redispersables, on entend une poudre conforme à l'invention qui après addition d'une quantité adaptée d'eau permet d'obtenir un pseudo-latex dont la granulométrie des particules est sensiblement identique à la granulométrie des particules de latex présentes dans l'émulsion de départ.

Les poudres selon l'invention sont stables au stockage ; elles peuvent être aisément redispersées dans l'eau sous forme de pseudo-latex et utilisées directement sous forme de poudre ou sous forme de pseudo-latex dans tous les domaines d'application connus des latex.

L'invention concerne aussi un pseudo latex obtenu par redispersion dans l'eau d'une poudre redispersable telle que définie précédemment.

L'invention concerne également le procédé de préparation des poudres redispersables selon l'invention qui consiste à mettre en oeuvre les étapes suivantes :
- on prépare le coeur par polymérisation en émulsion aqueuse puis,
- on polymérise un mélange de monomères en émulsion aqueuse sur le coeur en présence d'un agent de greffage et d'un initiateur de polymérisation organophile, ce par quoi on forme l'écorce puis,
- on élimine l'eau du milieu réactionnel.

On met donc en oeuvre les étapes décrites précédemment de manière à former un latex de polymères filmogènes à structure coeur/écorce et lors de la deuxième étape de polymérisation de l'écorce, telle que décrite ci-dessus, on réalise ladite polymérisation en présence d'un agent de greffage et d'un initiateur de polymérisation organophile.

L'initiateur de polymérisation organophile présente une forte affinité pour les particules de polymère constituant le coeur de manière à améliorer le greffage. Il s'agit généralement d'un peroxyde ou d'un perester tel que notamment l'hydroperoxyde de cumène, le peroxyde de dicumyle, le tertio-butyle pernéodécanoate, le tertio-butyle per3,5,5-triméthylhexanoate, le peroxyde de bis (3,5,5-triméthylhexanoyle), le peroxyde de dioctanoyle, le peroxyde de dilauroyle et le peroxyde de dibenzoyle. On recommande plus particulierement d'utiliser l'association tert-butyl perbenzoate/acide ascorbique. La teneur pondérale en cette association peut être comprise entre 0,5 et 5% en poids par rapport au poids total des monomères de l'écorce.

Il est à noter que si à la place de l'initiateur organophile on utilise un initiateur hydrosoluble, tel que le persulfate d'ammonium, on obtient une poudre à redispersabilité médiocre.

Il est souhaitable d'utiliser un agent de transfert pour ajuster les masses molaires du polymère de l'écorce. On peut utiliser les mêmes agents de transfert que ceux cités ci-dessus pour préparer le coeur ainsi que les alcanoates (C₁₋C₆) d'alkyl (C₁-C₁₂) mercaptans, tel que le méthylmercapto-propionate.

Le latex obtenu présente généralement une granulométrie comprise entre 0,1 et 0,3 µm.

Au latex, on peut éventuellement ajouter, en vue de faciliter la préparation de la composition pulvérulente, une charge minérale telle que définie précédemment. Les teneurs respectives des divers constituants sont choisies de telle sorte que les compositions pulvérulentes séchées présentent la composition définie auparavant.

L'eau de cette émulsion est ensuite éliminée et le produit obtenu pulvérisé pour obtenir une poudre. Les étapes d'élimination de l'eau de l'émulsion de latex et d'obtention d'une poudre peuvent être séparées ou concomitantes. Ainsi, on peut utiliser un procédé de congélation, suivie d'une étape de sublimation, ou de lyophilisation, de séchage ou de séchage par atomisation (séchage/pulvérisation).

De préférence, on élimine l'eau après avoir réglé le pH du milieu réactionnel entre 6 et 9,

Le séchage par atomisation est le procédé préféré car il permet d'obtenir directement la poudre à la granulométrie désirée sans passer nécessairement par l'étape de broyage. Le séchage par atomisation peut s'effectuer de manière habituelle dans tout appareil connu tel que par exemple une tour d'atomisation associant une pulvérisation réalisée par une buse ou une turbine avec un courant de gaz chaud.

La température d'entrée du gaz chaud (en général de l'air), en tête de colonne, est de préférence comprise entre 100 et 115°C et la température de sortie est de préférence comprise entre 55 et 65°C.

Les charge minérales peuvent être ajoutées à l'émulsion aqueuse de polymère de départ ou encore directement à la composition pulvérulente finale.

De préférence, tout ou partie de la charge minérale est introduite lors de l'étape de pulvérisation dans le procédé de séchage par atomisation (séchage/pulvérisation).

La présence de ces charges minérales dans l'émulsion favorise la préparation de la poudre et sa stabilité au stockage en évitant l'aggrégation de la poudre, c'est-à-dire son mottage.

Les poudres redispersables ou les pseudo-latex selon l'invention conviennent tout particulièrement dans l'industrie du bâtiment comme additifs aux mélanges de liants minéraux hydrauliques pour la réalisation d'enduits de protection et de décoration, des mortiers-colles et des ciments-colles destinés à la pose de carrelages et de revêtements de sols où elles sont utilisées à un taux pondéral de 1 à 10 %, de préférence de 2 à 5 %. Elles s'avèrent particulièrement bien adaptées à la préparation de produits en poudre prêts à l'emploi à base de ciment ainsi que de plâtre. Elles n'augmentent pas le temps de prise de ces liants et ne présentent ou n'induisent aucun mottage au stockage.

Les poudres de l'invention ou les pseudo-latex en dérivant sont utilisables en outre dans tous les autres domaines d'application des latex, plus particulièrement dans le domaine des adhésifs, du couchage du papier et des peintures. Les poudres selon l'invention peuvent comporter en outre les additifs usuels, en particulier des biocides, des microbiostats, des bactériostatiques, et des anti-mousses silicones et organiques.

Les poudres selon l'invention peuvent également être utilisées comme poudres réactives avec des polymères portant des liaisons isocyanates, époxy ou acides pour réticuler les produits pour peinture et revêtement.

Dans ce qui suit ou ce qui précède, les parties et pourcentages sont exprimés en poids, sauf indication contraire. Des exemples vont maintenant être donnés à titre non limitatif.

### EXEMPLES

### Exemple 1 : surpolymérisation de 4 % en poids de O-méthacryloyl-saccharose sur une semence de copolymère styrène-butadiène carboxylée en présence d'agent de greffage.

1. On prépare 4 kg d'un latex semence d'extrait sec massique 49,5 % par polymérisation en émulsion en présence de persulfate d'ammonium d'un mélange de :
   . 37 % en poids de butadiène,
   . 59 % en poids de styrène, et
   . 4% en poids d'acide acrylique.

   Le tertiobutylmercaptan est utilisé en tant qu'agent de transfert dans une proportion de 0,8 % en poids par rapport au mélange de monomères.
2. On prépare les trois solutions suivantes :
   - solution A : mélange de 217,5 g de méthacrylate de méthyle (MAM) et 1,9 g de méthacrylate d'allyle (ALMA) qui est un agent de greffage.
   - solution B : mélange de 79 g de O-méthacryloyl-saccharose dans 150 g d'eau déionisée.
   - solution C : mélange de 2,9 g d'acide ascorbique et de 2 g de dodécylbenzène sulfonate de sodium, qui est un émulsifiant.
3. Le latex semence préparé à l'étape 1 est chargé dans un réacteur de polymérisation équipé d'un agitateur, d'un condenseur et des tubes d'alimentation en réactifs. II est chauffé pendant 1 h sous agitation de manière à atteindre une température de 80 ± 1°C.
   Pendant cette montée en température, on mélange 7,4 g de tertbutylperbenzoate (qui forme avec l'acide ascorbique l'initiateur de polymérisation) avec 26,3 g de solution A et on introduit ce mélange dans le réacteur au cours de sa montée en température au moment où celle-ci atteint 30 ± 1°C. Puis, lorsque la température atteint 35 ± 1°C, 27,3 g de la solution B sont ajoutés au réacteur.
   Enfin, quand la température des réactifs atteint 80 ± 1°C et s'est stabilisée, le reste des solutions A et B est ajouté au réacteur sur une période de 3 h, et la solution C sur une période de 3 h 30.
   A la fin de l'introduction des réactifs des solutions A, B et C, le mélange du réacteur est maintenu à 80 ± 1°C pendant 1 h.
   Le latex est ensuite refroidi et déchargé du réacteur. On constate qu'aucun grain ni aucune croûte ne s'est formé sur la paroi du réacteur pendant la polymérisation.
4. Le latex obtenu présente les caractéristique suivantes :
   . extrait sec : 51,1 % en poids,
   . pH = 5,0,
   . viscosité mesurée au Brookfield RTV-DV 11 à 50 tr/min : 180 mPa.s (cP),
   . taille des particules mesurée par photosédimentomètre Brookhaven DCP 1000 : 0,17 ± 0,01 µm.

### Exemple 2 : surpolymérisation de 6 % en poids de O-méthacryloyl-saccharose sur une semence de copolymère styrène-butadiène carboxylée en présence d'un agent de greffage.

On répète les opérations mises en oeuvre dans l'exemple 1 si ce n'est que la solution B comprend une masse de 118,8 g de O-méthacryloyl-saccharose.

Le latex obtenu présente les caractéristiques suivantes :
. extrait sec : 51 % en poids,
. pH = 5,0,
. viscosité mesurée au Brookfield RTV-DV 11 à 50 tr/min : 320 mPa.s (cP),
. taille des particules mesurée par photosédimentomètre Brookhaven DCP 1000 : 0,17 ± 0,01 µm,

### Exemple 3 : séchage des latex obtenus dans les exemples précédents et redispersion des poudres obtenues.

Les latex préparés dans les exemples 1 et 2 sont transformés en poudre par séchage/pulvérisation après ajustement de leur pH à 7 avec une solution à 10 % de soude. Ce séchage est réalisé dans une tour d'atomisation dans laquelle la température d'entrée de l'air chaud est de 105°C et la température de sortie de 60°C. Pendant l'opération d'atomisation, un agent anti-mottant (kaolin) est ajouté au latex à un taux de 12 % en poids.

Les poudre obtenues présentent les caractéristiques suivantes :
. excellente fluidité,
. grande stabilité au stockage : aucun mottage n'apparaît après stockage pendant 2 semaines à 55°C,
. excellent mouillage par l'eau,
. redispersion spontanée, rapide et totale aussi bien dans l'eau déionisée que dans une solution concentrée de CaCl₂ (1M).

Les distributions granulométriques des pseudo-latex obtenus par redispersion de ces poudres dans l'eau déterminées avec un photosédimentomètre Brookhaven DCP1000 sont identiques à celles des latex des exemples 1 et 2.

Les poudres présentent de bonnes propriétés lorsqu'elles sont utilisée à un taux de 5 % en poids dans les mortiers standards. Elles améliorent en particulier leur temps de prise et leurs propriétés mécaniques.

### Exemple comparatif 4 : surpolymérisation de 4 % en poids de O-méthacryloyl-saccharose sur une semence styrène/butadiène carboxylée sans agent de greffage.

On met en oeuvre le mode de préparation de l'exemple 1 en supprimant l'agent de greffage, c'est-à-dire le méthacrylate d'allyle de la solution A. Le latex obtenu présente les caractéristiques suivantes :
. extrait sec : 51,1 % en poids,
. pH = 5,0,
. viscosité mesurée au Brookfield RTV-DV 11 à 50 tr/min : 520 mPa.s (cP),
. taillé des particules mesurée par photosédimentomètre Brookhaven DCP 1000 : 0,16 ± 0,01 µm.

Après atomisation par séchage/pulvérisation selon la procédure de l'exemple 3, la poudre obtenue ne présente qu'une redispersabilité partielle : le pourcentage de particules de taille supérieure à 43 µm est de 40 %.

## Revendications

1. Poudre redispersable dans l'eau à base de polymères filmogènes sensiblement insolubles dans l'eau préparés par polymérisation en émulsion aqueuse de monomères à insaturation éthylénique et à structure "coeur/écorce" comportant :
. un coeur hydrophobe à base d'un polymère présentant une Tg (température de transition vitreuse) comprise entre - 30 et 25°C, et
. une écorce à base d'un polymère dur, hydrophile, présentant une Tg supérieure à 55°C,
l'écorce étant liée au coeur par des liaisons covalentes résultant de la réaction d'un agent de greffage de l'écorce sur les insaturations éthyléniques subsistant dans le coeur, caractérisée en ce que l'écorce est préparée par polymérisation en émulsion sur le coeur d'un mélange de monomères, comportant :
. au plus 90 % en poids d'au moins un monomère choisi parmi le styrène, un acrylate ou méthacrylate d'alkyle en C₁ - C₁₂,
. au plus 50 % en poids d'au moins un monomère porteur d'un groupement saccharide et présentant au moins une insaturation éthylénique, et
. au plus 10 % en poids d'au moins un agent de greffage choisi parmi les esters alkéniques ainsi que les dérivés alkéniques des amides des acides acryliques et méthacryliques.

2. Poudre selon la revendication 1 caractérisée en ce que le coeur est préparé par polymérisation d'un mélange de monomères comportant de 99,9 à 92 % en poids d'au moins un monomère choisi parmi le styrène, le butadiène et les acrylates et méthacrylates d'alkyle en C₁-C₁₂, et de 0,1 à 8 % en poids d'au moins un monomère choisi parmi un acide carboxylique à insaturation éthylénique, un ester d'acide carboxylique insaturé à fonction hydroxyalkyle ou un monomère à fonction amide.

3. Poudre selon la revendication 1 ou 2, caractérisée en ce que le coeur est préparé par polymérisation d'un mélange de monomères à base de styrène et de butadiène.

4. Poudre selon l'une des revendications 1 à 3, caractérisée en ce que le monomère porteur d'un groupement saccharide et présentant au moins une insaturation éthylénique porte un groupement saccharide choisi parmi les mono- et disaccharides.

5. Poudre selon la revendication 4, caractérisée en ce que le groupement saccharide est le saccharose.

6. Poudre selon la revendication 5 caractérisée en ce que le monomère porteur d'un groupement saccharide et présentant au moins une insaturation éthylénique est choisi parmi le O-méthacryloyl-saccharose, le O-vinylbenzyl-saccharose ou le O-acétalstyryl-saccharose et leurs dérivés alkylés et/ou acétylés dans lesquels les groupements alkyls comportent un nombre de carbones compris entre 1 et 4.

7. Poudre selon l'une des revendications 1 à 6 caractérisée en ce que l'écorce est préparée par polymérisation en émulsion d'un mélange de méthacrylate de méthyle, de O-méthacryloyl-saccharose, et d'un agent de greffage.

8. Poudre selon l'une des revendications 1 à 6 caractérisée en ce que l'écorce est préparée par polymérisation en émulsion d'un mélange de styrène, de O-vinylbenzyl-saccharose et d'un agent de greffage.

9. Poudre selon l'une des revendications 1 à 8, caractérisée en ce que l'écorce constitue de 50 à 5 % en poids du poids total coeur + écorce.

10. Poudre selon l'une quelconque des revendications 1 à 9, caractérisée en ce que l'agent de greffage est choisi parmi les esters (méth)allyliques de l'acide (meth)acrylique, les esters (méth)allyliques des mono et diesters des acides maléique, fumarique et itaconique.

11. Poudre selon l'une quelconque des revendications 1 à 10, caractérisée en ce qu'elle comporte en outre au moins une charge minérale.

12. Pseudo latex obtenu par redispersion dans l'eau d'une poudre telle que définie à l'une quelconque des revendications 1 à 11.

13. Procédé de préparation d'une poudre selon l'une des revendications 1 à 11 caractérisé en ce qu'on réalise les étapes suivantes :
- on prépare le coeur par polymérisation en émulsion aqueuse puis,
- on polymérise un mélange de monomères en émulsion aqueuse sur le coeur en présence d'un agent de greffage et d'un initiateur de polymérisation organophile, ce par quoi on forme l'écorce puis,
- on élimine l'eau du milieu réactionnel.

14. Procédé selon la revendication 13 caractérisé en ce que l'initiateur de polymérisation organophile est choisi parmi un peroxyde ou un perester.

15. Procédé selon la revendication 13 ou 14 caractérisé en ce que rinitiateur de polymérisation organophile est l'association tert-butyl perbenzoate/acide ascorbique.

16. Procédé selon l'une des revendications 13 à 15, caractérisé en ce qu'on élimine l'eau après avoir réglé le pH du milieu réactionnel entre 6 et 9.

17. Procédé selon l'une des revendications 13 à 16, caractérisé en ce qu'on élimine l'eau par séchage/pulvérisation.

18. Utilisation des pseudo latex définis à la revendication 12 et des poudres telles que définies aux revendications 1 à 11, comme additifs à des liants hydrauliques, des adhésifs, des compositions de couchage du papier et des peintures.

19. Utilisation des poudres telles que définies aux revendications 1 à 11 comme poudres réactives avec des polymères portant des liaisons isocyanates, époxy ou acides pour réticuler les produits pour peinture et revêtement.

## Claims

1. Water-redispersible powder based on film-forming polymers which are substantially water-insoluble and which are prepared by aqueous emulsion polymerization of monomers containing ethylenic unsaturation and with a "core/shell" structure comprising:
- a hydrophobic core based on a polymer exhibiting a Tg (glass transition temperature) of between -30 and 25°C, and
- a shell based on a hard, hydrophilic polymer exhibiting a Tg higher than 55°C,
the shell being bonded to the core by covalent bonds resulting from the reaction of an agent for grafting the shell onto the ethylenic unsaturations remaining in the core,
characterized in that the shell is prepared by emulsion polymerization, on the core, of a mixture of monomers comprising:
- at most 90 % by weight of at least one monomer chosen from styrene and a C₁-C₁₂ alkyl acrylate or methacrylate,
- at most 50 % by weight of at least one monomer carrying a saccharide group and exhibiting at least one ethylenic unsaturation, and
- at most 10 % by weight of at least one grafting agent chosen from alkene esters and alkene derivatives of amides of acrylic and methacrylic acids.

2. Powder according to Claim 1, characterized in that the core is prepared by polymerization of a mixture of monomers comprising from 99.9 to 92 % by weight of at least one monomer chosen from styrene, butadiene and C₁-C₁₂ alkyl acrylates and methacrylates and from 0.1 to 8 % by weight of at least one monomer chosen from a carboxylic acid containing ethylenic unsaturation, an ester of unsaturated carboxylic acid containing a hydroxyalkyl functional group or a monomer containing an amide functional group.

3. Powder according to Claim 1 or 2, characterized in that the core is prepared by polymerization of a mixture of monomers based on styrene and butadiene.

4. Powder according to one of Claims 1 to 3, characterized in that the monomer carrying a saccharide group and exhibiting at least one ethylenic unsaturation carries a saccharide group chosen from mono- and disaccharides.

5. Powder according to Claim 4, characterized in that the saccharide group is sucrose.

6. Powder according to Claim 5, characterized in that the monomer carrying a saccharide group and exhibiting at least one ethylenic unsaturation is chosen from O-methacryloylsucrose, O-vinylbenzylsucrose and O-acetalstyrylsucrose and their alkylated and/or acetylated derivatives in which the alkyl groups contain a number of carbons of between 1 and 4.

7. Powder according to one of Claims 1 to 6, characterized in that the shell is prepared by emulsion polymerization of a mixture of methyl methacrylate, of O-methacryloylsucrose and of a grafting agent.

8. Powder according to one of Claims 1 to 6, characterized in that the shell is prepared by emulsion polymerization of a mixture of styrene, of O-vinylbenzylsucrose and of a grafting agent.

9. Powder according to one of Claims 1 to 8, characterized in that the shell constitutes from 50 to 5 % by weight of the total core + shell weight.

10. Powder according to any one of Claims 1 to 9, characterized in that the grafting agent is chosen from (meth)allyl esters of (meth)acrylic acid and (meth)allyl esters of the mono- and diesters of maleic, fumaric and itaconic acids.

11. Powder according to any one of Claims 1 to 10, characterized in that it additionally comprises at least one inorganic filler.

12. Pseudolatex obtained by redispersion in water of a powder as defined in any one of Claims 1 to 11.

13. Process for the preparation of a powder according to one of Claims 1 to 11, characterized in that the following stages are carried out:
- the core is prepared by aqueous emulsion polymerization, then
- a mixture of monomers is polymerized in aqueous emulsion on the core in the presence of a grafting agent and of an organophilic polymerization initiator, whereby the shell is formed, then
- water is removed from the reaction mixture.

14. Process according to Claim 13, characterized in that the organophilic polymerization initiator is chosen from a peroxide or a perester.

15. Process according to Claim 13 or 14, characterized in that the organophilic polymerization initiator is the tert-butyl perbenzoate/ascorbic acid combination.

16. Process according to one of Claims 13 to 15, characterized in that the water is removed after the pH of the reaction mixture has been adjusted between 6 and 9.

17. Process according to one of Claims 13 to 16, characterized in that the water is removed by spray-drying.

18. Use of the pseudolatices defined in Claim 12 and of the powders as defined in Claims 1 to 11, as additives to hydraulic binders, adhesives, paper-coating compositions and paints.

19. Use of the powders as defined in Claims 1 to 11, as reactive powders with polymers carrying isocyanate, epoxy or acidic bonds, for crosslinking the products for paint and coating.

## Patentansprüche

1. Ein in Wasser wiederdispergierbares Pulver auf Basis von in Wasser nahezu unlöslichen, filmbildenden Polymeren, hergestellt mittels wäßriger Emulsionspolymerisation ethylenisch ungesättigter Monomere mit "Kern/Hülle"-Struktur, umfassend
• einen hydrophoben Kern auf Basis eines Polymers mit einer Glasübergangstemperatur Tg zwischen -30 °C und 25 °C und
• eine Hülle auf Basis eines hydrophilen, harten Polymers mit einer Glasübergangstemperatur Tg von mehr als 55 °C,
wobei die Hülle über kovalente Bindungen an den Kern gebunden ist, die aus der Reaktion eines Reagenzes zur Pfropfung der Hülle auf die im Kern vorhandenen, ethylenisch ungesättigten Bindungen resultieren,
dadurch gekennzeichnet, daß die Hülle hergestellt ist durch Emulsionspolymerisation einer Monomerenmischung auf den Kern, die
• höchstens 90 Gew.-% mindestens eines Monomers, das ausgewählt ist aus Styrol und C₁-C₁₂-Alkylacrylat oder -methacrylat,
• höchstens 50 Gew.-% mindestens eines Monomers mit einer saccharidgruppe und höchstens einer ethylenisch ungesättigten Bindung und
• höchstens 10 Gew.-% mindestens eines Pfropfungsreagenzes, das ausgewählt ist aus Alkenestern sowie Alkenderivaten von Amiden von Acryl- und Methacrylsäuren,
enthält.

2. Pulver nach Anspruch 1, dadurch gekennzeichnet, daß der Kern hergestellt ist durch Polymerisation einer Mischung von Monomeren, enthaltend 99,9 bis 92 Gew.-% mindestens eines Monomers, ausgewählt aus Styrol, Butadien und C₁-C₁₂-Alkylacrylaten und -methacrylaten, und 0,1 bis 8 Gew.-% mindestens eines Monomers, ausgewählt aus einer ethylenisch ungesättigten Carbonsäure, einem ungesättigten Carbonsäureester mit Hydroxylalkylfunktion oder einem Monomer mit Amidfunktion.

3. Pulver nach Anspruch 1 oder 2, dadurch gekennzeichnet, daß der Kern hergestellt ist durch Polymerisation einer Mischung von Monomeren auf Basis von Styrol und Butadien.

4. Pulver nach einem der Ansprüche 1 bis 3, dadurch gekennzeichnet, daß das Monomer mit einer Saccharidgruppe und mindestens einer ethylenisch ungesättigten Bindung eine Saccharidgruppe enthält, die ausgewählt ist aus Mono- und Disacchariden.

5. Pulver nach Anspruch 4, dadurch gekennzeichnet, daß die Saccharidgruppe Saccharose ist.

6. Pulver nach Anspruch 5, dadurch gekennzeichnet, daß das Monomer mit der Saccharidgruppe und mindestens einer ethylenisch ungesättigten Bindung ausgewählt ist aus O-Methacryloylsaccharose, O-Vinylbenzylsaccharose oder O-Acetalstyrylsaccharose und deren alkylierten und/oder acetylierten Derivaten, bei denen die Alkylgruppen eine Kohlenstoffanzahl zwischen 1 und 4 aufweisen.

7. Pulver nach einem der Ansprüche 1 bis 6, dadurch gekennzeichnet, daß die Hülle hergestellt ist durch Emulsionspolymerisation einer Mischung aus Methylmethacrylat, O-Methacryloylsaccharose und einem Pfropfungsreagenz.

8. Pulver nach einem der Ansprüche 1 bis 6, dadurch gekennzeichnet, daß die Hülle hergestellt ist durch Emulsionspolymerisation einer Mischung aus Styrol, O-Vinylbenzylsaccharose und einem Pfropfungsreagenz.

9. Pulver nach einem der Ansprüche 1 bis 8, dadurch gekennzeichnet, daß die Hülle 50 bis 5 Gew.-% des Gesamtgewichts aus Kern + Hülle darstellt.

10. Pulver nach einem der Ansprüche 1 bis 9, dadurch gekennzeichnet, daß das Pfropfungsreagenz ausgewählt ist aus (Meth-)Allylestern der (Meth-)Acrylsäuren sowie (Meth-)Allylestern von Mono- und Diestern der Maleinsäure, der Fumarsäure oder der Itaconsäure.

11. Pulver nach einem der Ansprüche 1 bis 10, dadurch gekennzeichnet, daß es außerdem mindestens einen anorganischen Füllstoff enthält.

12. Pseudolatex, erhalten durch Redispersion eines Pulvers nach einem der Ansprüche bis 11 in Wasser.

13. Verfahren zur Herstellung eines Pulvers nach einem der Ansprüche 1 bis 11, dadurch gekennzeichnet, daß man die folgenden Verfahrensschritte durchführt:
• Man stellt den Kern mittels wäßriger Emulsionspolymerisation her; anschließend
• polymerisiert man eine Mischung von Monomeren in wäßriger Emulsion auf den Kern in Gegenwart eines Pfropfungsreagenzes und eines organophilen Polymerisationsinitiators, wodurch man die Hülle bildet; dann
• eliminiert man das Wasser aus dem Reaktionsmilieu.

14. Verfahren nach Anspruch 13, dadurch gekennzeichnet, daß der organophile Polymerisationsinitiator ausgewählt wird aus einem Peroxid oder einem Perester.

15. Verfahren nach Anspruch 13 oder 14, dadurch gekennzeichnet, daß der organophile Polymerisationsinitiator eine Vereinigung von tert.-Butylperbenzoat und Ascorbinsäure ist.

16. Verfahren nach einem der Ansprüche 13 bis 15, dadurch gekennzeichnet, daß man das Wasser eliminiert, nachdem man den pH-Wert des Reaktionsmilieus zwischen 6 und 9 eingestellt hat.

17. Verfahren nach einem der Ansprüche 13 bis 16, dadurch gekennzeichnet, daß man das Wasser durch Trocknung/Zerstäubung entfernt.

18. Verwendung von Pseudolatizes nach Anspruch 12 und Pulvern nach den Ansprüchen 1 bis 11 als Additive für hydraulische Bindemittel, Klebstoffe, Zusammensetzungen für die Beschichtung von Papier und für Farben.

19. Verwendung von Pulvem nach den Ansprüchen 1 bis 11 als reaktive Pulver zusammen mit Polymeren, die Isocyanat-, Epoxy- oder Säurebindungen enthalten, um Produkte für Farben und Beschichtungen zu vernetzen.
